# EUROPÄISCHE PATENTANMELDUNG

(11) **EP 3 901 104 A1**
(43) Veröffentlichungstag der Anmeldung: **27.10.2021**
(21) Anmeldenummer: 20171428.4
(22) Anmeldetag: 24.04.2020
(51) Int. Cl.: C02F 1/02, C02F 1/68, E03C 1/044, C02F 103/02

(54) **VORRICHTUNG ZUR AUFBEREITUNG VON WASSER MIT AUFNAHMEVORRICHTUNG**

(71) Anmelder: Aquis Systems AG, 9445 Rebstein (CH)
(72) Erfinder: WAWRLA, Andreas, 9445 Rebtein (CH); HUCK, Kai, 9444 Diepoldsau (CH)
(74) Vertreter: Otten, Roth, Dobler & Partner mbB Patentanwälte

(57) **Zusammenfassung**

Es wird eine Vorrichtung zur Aufbereitung von Wasser, umfassend eine Wassererhitzungsvorrichtung mit einer Versorgungsleitung und einer angeschlossenen ersten Zuleitung zur Leitung von heißem und/oder kochend heißem Wasser und eine zweite Zuleitung zur Leitung von kaltem und/oder karbonisiertem Wasser, wobei die erste und die zweite Zuleitung über eine Verbindungsstelle in einer gemeinsamen Förderleitung münden, die in einem Wasserauslass endet vorgeschlagen, die nach einer Heißwasserförderung einerseits ein Nachtropfen verhindert und einen zusätzlichen Verbrühungsschutz bei einer anschließenden Kaltwasserförderung bietet.

Zudem besteht bei einem kurzfristigen Wechsel von einem Heisswasserbezug zu einem Kaltwasserbezug der Anspruch des Nutzers, dass unmittelbar kühles Wasser gefördert wird und nicht das in der Leitung stehende heisse Wasser verworfen werden muss. Dies wird erfindungsgemäß dadurch erreicht, dass in der ersten Zuleitung oder in der Versorgungsleitung eine Aufnahmevorrichtung zur Entwässerung der Förderleitung bei einem gestoppten Fluss des Wassers der ersten Zuleitung vorgesehen ist und die Aufnahmevorrichtung mit dem Wasser aus der Förderleitung befüllbar ist.

## Beschreibung

Die Erfindung betrifft eine Vorrichtung zur Aufbereitung von Wasser gemäß dem Oberbegriff des Anspruchs 1.

### Stand der Technik:

Die Anforderungen an Inventar in Häusern oder Wohnungen werden immer höher, die Multifunktionalität wird immer weiter priorisiert. Dieser Trend macht auch vor Küchen und deren Einbaumodulen nicht halt. In vielen modernen Küchen werden Wassersysteme verbaut, die aufbereitetes Wasser verschiedenster Arten liefern können: von gefiltertem, extra gekühltem Wasser bis hin zu kochendem Wasser. Gelegentlich werden auch Karbonisierungssysteme verbaut, sodass direkt aus der Armatur gesprudeltes Wasser gezapft werden kann. Die verwendeten Armaturen weisen dabei oftmals nur einen einzigen Wasserauslass mit einer gemeinsamen Leitung für das in unterschiedlicher Weise aufbereitete Wasser auf. Normales ungefiltertes bzw. nicht aufbereitetes Leitungswasser wird in der Regel durch eine separate Leitung zum Auslass geführt.

Bisherige Systeme weisen bei einer gemeinsamen Leitung für gekühltes und heißes bzw. kochendes Wasser ein erhöhtes Risiko für Verbrühungen auf, da nach einer Heißwasserförderung heißes Wasser in der gemeinsamen Förderleitung verbleibt, welches zum einen nachtropfen kann und zum anderen auch bei anschließendem Bezug von kaltem Wasser zuerst aus der Leitung gefördert wird.

Zudem besteht bei einem kurzfristigen Wechsel von einem Heisswasserbezug zu einem Kaltwasserbezug der Anspruch des Nutzers, dass unmittelbar kühles Wasser gefördert wird und nicht das in der Leitung stehende heisse oder fast kochende Wasser, das einerseits, wie erwähnt, eine Verbrühung zur Folge haben kann und andererseits verworfen werden muss, womit unnötige Wasserverschwendung generiert wird.

### Aufgabe und Vorteile der Erfindung:

Aufgabe der Erfindung ist es demgegenüber, eine Vorrichtung zur Aufbereitung von Wasser vorzuschlagen, die nach einer Heißwasserförderung einerseits ein Nachtropfen verhindert und einen zusätzlichen Verbrühungsschutz bei einer anschließenden Kaltwasserförderung bietet.

Diese Aufgabe wird, ausgehend von einer Vorrichtung zur Aufbereitung von Wasser der einleitend genannten Art, durch die Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße Vorrichtung zur Aufbereitung von Wasser dadurch aus, dass in der ersten Zuleitung oder in der Versorgungsleitung eine Aufnahmevorrichtung zur Entwässerung der Förderleitung bei einem gestoppten Fluss des Wassers der ersten Zuleitung vorgesehen ist und die Aufnahmevorrichtung mit dem Wasser aus der Förderleitung, sowie gegebenenfalls auch mit Wasser, das noch in der ersten Zuleitung steht, befüllbar ist.

Mit Hilfe einer derartigen Aufnahmevorrichtung kann das nach einem Förderungsstopp und einem damit einhergehenden Stopp des Wasserflusses üblicherweise in der Förderleitung verbleibende Wasser wenigstens teilweise aus der Förderleitung entfernt werden, sodass ein Nachtropfen verhindert wird, da die Wassersäule dadurch räumlich von der Auslassöffnung entfernt wird.

Durch die erfindungsgemäße Verringerung der verbleibenden Wassermenge in der Förderleitung bis hin zur vollständigen Entleerung der Förderleitung kann eine Verbrühungsgefahr verringert werden. Je weniger Wasser in der Förderleitung verbleibt, desto kleiner ist weiter die Verbrühungsgefahr nach einer Heißwasserförderung, da das Wasser schneller über die Zeit auskühlt.

Grundsätzlich unterscheidet man zwischen sogenannten geschlossenen Systemen bzw. Boilersytemen, wenn ein Ventil zur Leitungsunterbrechung in der ersten Zuleitung in Richtung Wasserauslass platziert ist. Bei offenen Systemen muss das Ventil in der Versorgungsleitung sein, und nicht in der ersten Zuleitung zur Armatur hin, d.h. bei einem offenen System können im Allgemeinen Dampf bzw. Heisswassertropfen austreten. Die erfindungsgemäße Vorrichtung zeichnet sich aber gerade dadurch aus, dass sie für offene und geschlossene Systeme grundsätzlich anwendbar ist.

Insbesondere sind bei einem offenen System zwei Ausführungsvarianten der Erfindung denkbar, nämlich eine mit einer Aufnahmevorrichtung in der ersten Zuleitung, wie beim geschlossenen System auch, oder mit einer Aufnahmevorrichtung in der Versorgungsleitung, die zur Wassererhitzungsvorrichtung hinführt. Eine Aufnahme des rückfließenden Wassers kann im zuletzt genannten Fall auch aus der Förderleitung über die Wassererhitzungsvorrichtung erfolgen, wobei das zurückfließende Wasser zunächst in die Wassererhitzungsvorrichtung fließen kann, bevor es in die Aufnahmevorrichtung gelangt.

Über eine zweite Zuleitung ist auch das Fördern von gekühltem Wasser und/oder karbonisiertem Wasser möglich. Darüber hinaus kann auch in der zweiten Zuleitung eine Aufnahmevorrichtung gemäß der Erfindung angeordnet werden. Nach einer Kaltwasserzufuhr wird so Kaltwasser aus der Förderleitung entfernt, wodurch bei anschließender Heißwasserförderung weniger Wasser verworfen werden muss, bis Wasser mit der gewünschten, hohen Temperatur entnommen werden kann, wodurch der Wasserverbrauch vermindert wird und dadurch Ressourcen, Kosten und Umwelt geschont werden. Nach dem Zapfvorgang von karbonisiertem Wasser kann die Leitung grundsätzlich mit Kaltwasser kurz nachgespült werden, sodass in der Förderleitung kein karbonisiertes Wasser mehr steht. Dies bedeutet in die Aufnahmevorrichtung gelangt nur Kaltwasser.

Von besonderem Vorteil ist, wenn die Aufnahmevorrichtung so ausgebildet ist, dass darin wenigstens das Wasservolumen der Förderleitung aufnehmbar ist. Dadurch kann das ganze Wasser aus der Förderleitung entnommen werden, wodurch sich der Verwurf von Wasser bis zur Förderung von Wasser mit der gewünschten Temperatur auf ein Minimum reduziert. Ressourcen, Kosten und Umwelt können so effizient geschont werden.

Vorzugsweise weist die Aufnahmevorrichtung eine Rückführvorrichtung auf, mit der das Wasser ins Leitungssystem, insbesondere die Versorgungsleitung, die erste bzw. die zweite Zuleitung rückleitbar ist, also nicht dauerhaft gespeichert oder sogar verworfen wird. Wasser, welches zuvor aus der Förderleitung entnommen wurde, kann so aktiv genutzt werden und muss nicht zwangsläufig ungenutzt verworfen werden. Diese Rückführvorrichtung umfasst erfindungsgemäß eine Venturi-Düse. Wird Wasser über die Versorgungsleitung oder die erste Zuleitung bzw. zweite Zuleitung durch die Venturi-Düse geleitet, wird in einem Reservoir, das mit der Leitung verbunden ist, ein Unterdruck erzeugt, durch den das im Reservoir bevorratete Wasser hinausgesogen und dem Wasserstrom in der ersten Zuleitung bzw. zweiten Zuleitung bzw. der Versorgungsleistung zugeführt wird. Eine solche Rückführvorrichtung wirkt sich positiv auf den Verbrauch, sowie die Ressourcen-, Kosten- und Umweltfreundlichkeit des Systems aus. Ferner kann eine passive Entleerung aus dem Membranausgleichsgefäß erleichtert werden, sodass kein aktiver Mechanismus mit Energie versorgt werden muss.

Bei einer besonders bevorzugten Weiterbildung der Erfindung umfasst die Aufnahmevorrichtung ein Membranausgleichsgefäß, das in Kombination mit der Venturi-Düse das entsprechende Reservoir darstellt, aus dem zwischengespeichertes Wasser rückgeführt werden kann. Ein solches Membranausgleichsgefäß ist ein bautechnisch kompaktes, im Vergleich mit anderen Lösungen relativ günstiges Bauteil, mit dem sich die Erfindung umsetzen lassen kann. Das Aufnahmevolumen ist bei einem Membranausgleichsgefäß durch eine Membran zumindest teilweise begrenzt. In der Förderleitung bis hin zur ersten Zuleitung verbliebenes Wasser bildet insbesondere eine Wassersäule aus, deren Druck auf die Membran wirkt und das Volumen im Membranausgleichsgefäß vergrößert, sodass das verbliebene Wasser darin zumindest teilweise aufgenommen werden kann. In der Regel drückt das Wasser in der Leitung gegen die Membran, wobei auf der anderen Seite der Membran lediglich der Umgebungsluftdruck herrscht. In vorteilhafter Weise ist zudem das Volumen, das im Membranausgleichsgefäß zur Aufnahme bereitgestellt wird, an die in der Förderleitung bzw. ersten Zuleitung verbliebene Wassermenge angepasst. Je mehr Wasser in der Förderleitung bzw. ersten Zuleitung verblieben ist, desto höher ist der Druck und desto mehr Volumen wird durch Ausdehnung der Membran bereitgestellt.

Von Vorteil ist weiter, wenn die Aufnahmevorrichtung über eine als Venturi-Düse ausgebildete Rückführvorrichtung, die in der ersten Zuleitung oder auch der Versorgungsleitung angeordnet ist bzw. mit der ersten Zuleitung bzw. Versorgungsleitung verbunden ist, an die Leitung gekoppelt ist, in welche das aufgenommene Wasser rückgeführt werden soll. Auch eine Anordnung der Venturi-Düse in der zweiten Zuleitung ist entsprechend grundsätzlich möglich, sofern die Aufnahmevorrichtung daran angeschlossen werden soll. Fließt Wasser in einer solchen Anordnung durch eine Venturi-Düse, so entsteht ein Unterdruck, sodass das Wasser aus der Aufnahmevorrichtung in die Leitung, in der die Venturi-Düse angeordnet ist, geleitet und mit dem dort fließenden Wasser über die Förderleitung zum Wasserauslass befördert wird. Eine Rückführung des aufgenommenen Wassers kann also gleich bei der nächsten Leitung von Wasser durch die erste Zuleitung bzw. Versorgungsleitung erfolgen.

Die Aufnahmevorrichtung wird so entleert und für eine erneute Befüllung nach einem Stopp des Wasserflusses vorbereitet. Eine solche Ausführung reduziert den Wasserverbrauch und schont Ressourcen, Kosten und Umwelt, denn es kann somit auch z.B. eine Pumpe, die eine eigene Stromversorgung benötigt, vermieden werden. Die Rückführvorrichtung kann zudem praktisch wartungsfrei betrieben werden.

In einer vorteilhaften Ausbildung ist die Aufnahmevorrichtung in vertikaler Richtung unterhalb oder in gleicher Ebene zur Verbindungstelle angeordnet, wobei die Förderleitung und der Wasserauslauf in vertikaler Richtung oberhalb der Verbindungsstelle liegt, sodass eine Rückströmung des Wassers aus der Förderleitung durch die Schwerkraft ausbildbar ist. Dabei gilt, je höher der Wasserauslass relativ zur Aufnahmevorrichtung liegt, desto stärker bewirkt die Schwerkraft einen Rückfluss des Wassers. Durch eine solche Anordnung kann eine passive Entleerung aus dem Membranausgleichsgefäß erleichtert werden, sodass kein aktiver Mechanismus mit Energie versorgt werden muss.

Vorzugsweise ist die zweite Zuleitung an ein Wasserkühlsystem angeordnet, um gekühltes Wasser über die Zuleitung und die Förderleitung zu leiten.

Vorteilhafterweise weist die Versorgungsleitung bzw. die erste Zuleitung bzw. die zweite Zuleitung ein Ventil, insbesondere Magnetventil, auf, sodass der Fluss von Heißwasser und Kaltwasser gesteuert werden kann; abhängig davon, ob die erste Zuleitung mit einem Ventil geschlossen werden kann, sodass die Förderleitung von der Wassererhitzungsvorrichtung getrennt werden kann, handelt es ich um ein geschlossenes System oder anderenfalls um ein offenes System. Gerade in Bezug auf die Wassererhitzungsvorrichtung, die je nach Ausführungsform auch bis zu 100°C heißes Wasser (etwa für die Zubereitung von Tee und anderen Heißgetränken) liefern kann, stellt diese Absperrungsmöglichkeit bei einem geschlossenen System sicher, dass kochendes Wasser, Wasserdampf oder dergleichen ungewollt in die Förderleitung gelangt. Vorzugsweise ist an der zweiten Zuleitung ein Karbonisator zur Einspeisung von karbonisiertem Wasser mit einem Ventil, insbesondere Magnetventil, vorgesehen, um die Multifunktionalität der Vorrichtung weiter verbessern zu können.

Vorteilhaft ist eine Anordnung, bei der das Ventil, insbesondere Magnetventil, der Aufnahmevorrichtung in Fließrichtung vorgeschaltet angeordnet ist, da in dieser Reihenfolge gewährleistet werden kann, dass das Wasser aus der Förderleitung bzw. ersten Zuleitung nach Stopp des Wasserflusses durch Schließen des Ventils von der Aufnahmevorrichtung aufgenommen werden kann.

Die Wassererhitzungsvorrichtung, wie bereits oben dargestellt, kann als offenes oder geschlossenes System ausgebildet sein. Grundsätzlich kann die Wassererhitzungsvorrichtung über eine Versorgungsleitung gespeist werden. Eine entsprechende Leitung kann auch dazu verwendet werden, um ein Überdruckventil anzuschließen, damit bei vorherrschendem Überdruck in der Wassererhitzungsvorrichtung dieser herabgesenkt werden kann, indem Dampf an die Umgebung oder in ein gesondertes Gefäß bzw. eine gesonderte Leitung abgegeben werden kann. Es können aber auch geschlossene Systeme verwendet werden, welche ein entsprechendes Ausdehnungsvolumen bereitstellen.

### Ausführungsbeispiele:

Ausführungsbeispiele der Erfindung sind in den Zeichnungen dargestellt und werden anhand der Figuren nachfolgend näher erläutert.

Im Einzelnen zeigen:
- Figur 1: einen schematischen Aufbau einer Wasseraufbereitungsvorrichtung in Form eines geschlossenen Systems, bei dem eine Aufnahmevorrichtung und ein Ventil an der ersten Zuleitung angeordnet sind,
- Figur 2: einen schematischen Aufbau einer Wasseraufbereitungsvorrichtung in Form eines offenen Systems, bei dem eine Aufnahmevorrichtung an der ersten Zuleitung und ein Ventil an der Versorgungsleitung angeordnet sind und
- Figur 3: einen weiteren schematischen Aufbau einer Wasseraufbereitungsvorrichtung in Form eines offenen Systems, bei dem eine Aufnahmevorrichtung und ein Ventil an der Versorgungsleitung angeordnet sind.

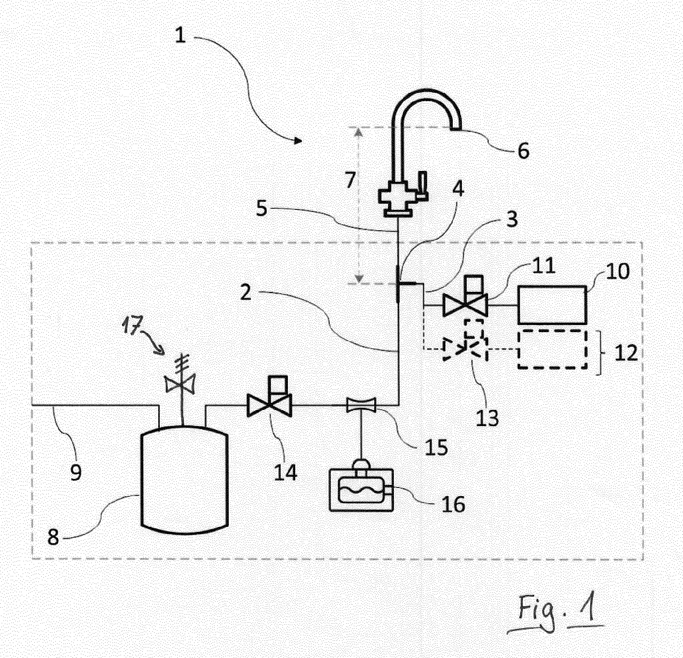

In Figur 1 ist eine Wasseraufbereitungsvorrichtung 1 in Form eines geschlossenen Systems dargestellt, bei der eine erste Zuleitung 2 zur Leitung von heißem Wasser und eine zweite Zuleitung 3 zur Leitung von kaltem und/oder karbonisiertem Wasser über eine Verbindungsstelle 4 in einer gemeinsamen Förderleitung 5 münden, die in einem Wasserauslass 6 endet. Dabei sind Verbindungsstelle 4 und Wasserauslass 6 mit einem vertikalen Höhenunterschied 7 zueinander ausgerichtet. An der ersten Zuleitung 2 ist weiter eine Wassererhitzungsvorrichtung 8 angeordnet, die über eine daran angeordnete Versorgungsleitung 9 gespeist wird. An der zweiten Zuleitung 3 ist ein Wasserkühlsystem 10 angeordnet. Eine Kaltwasserförderung kann über ein Ventil 11, insbesondere ein Magnetventil, welches in der zweiten Zuleitung 3 angeordnet ist, gesteuert werden. Denkbar ist auch eine Einspeisung von karbonisiertem Wasser mittels eines Karbonisators 12 an der zweiten Zuleitung 3, die über ein Ventil 13 gesteuert wird. Die Module zur Einspeisung von karbonisiertem Wasser sind hier gestrichelt dargestellt. Es sind verschiedene Optionen denkbar: Es kann z.B. nur kaltes oder nur karbonisiertes Wasser über die zweite Zuleitung 3 eingespeist werden. Es können aber auch beide als zueinander alternative Förderungsmöglichkeiten für den Benutzer zusammen installiert werden.

In der ersten Zuleitung 2 kann die Wassererhitzungsvorrichtung 8 über ein Ventil 14 in der ersten Zuleitung 2 von der Förderleitung 5 abgetrennt werden (geschlossenes System). Über eine Rückführvorrichtung 15 in Form einer Venturi-Düse ist eine Aufnahmevorrichtung 16 in Form eines Membranausgleichsgefäßes mit der ersten Zuleitung 2 verbunden, welche so ausgebildet ist, dass sie wenigstens teilweise das Wasservolumen der Förderleitung 5, vorzugsweise das gesamte Wasservolumen der Förderleitung 5, bevorzugt mehr als das Wasservolumen der Förderleitung 5 (insbesondere also vom Volumen her auch zusätzlich Volumen aus der ersten Zuleitung) aufnehmen kann.

Nicht dargestellt ist eine Ausführungsform, bei der zusätzlich in der zweiten Zuleitung 3 für das kalte und/oder das karbonisierte Wasser eine Rückführvorrichtung mit Membranausgleichsgefäß angeordnet ist. Auch für das karbonisierte Wasser kann ein Membranausgleichsgefäß vorgesehen sein, und das dort zwischengespeicherte Wasser wird später in die Leitung gespült; denn nach dem Zapfvorgang von karbonisiertem Wasser wird in der Regel ohnehin die Leitung mit Kaltwasser kurz nachgespült, sodass in der Förderleitung kein karbonisiertes Wasser mehr steht. Dies bedeutet in die Aufnahmevorrichtung gelangt nur Kaltwasser.

Kommt es bei einer Heißwasserförderung aus dem Wasserauslass 6 zu einem Stopp des Wasserflusses durch Schließen des Ventils 14, so bleibt im ersten Moment heißes Wasser in der Förderleitung 5 zurück. Durch den Druck, den die Wassersäule in der Förderleitung 5 auf die Membran des Membranausgleichsgefäßes ausübt, wird dieses ausgedehnt, sodass Wasser in dem Membranausgleichsgefäß aufgenommen wird und die Membran ausgedehnt wird. Dieses ist dabei so ausgebildet, dass es das gesamte Wasservolumen der Förderleitung 5 in sich aufnehmen kann, sodass oberhalb der Verbindungsstelle 4 anschließend kein Wasser mehr in der Förderleitung 5 steht. Bei einer anschließenden Kaltwasserförderung besteht dadurch keine Gefahr, dass als erste Menge an gefördertem Wasser heißes Wasser aus dem Wasserauslass 6 kommt. Bei der nächstfolgenden Förderung von Heißwasser wird über die als Rückführvorrichtung 15 dienende Venturi-Düse ein Unterdruck erzeugt, durch den das Wasser innerhalb des Membranausgleichsgefäßes zurück in die erste Zuleitung 2 gesogen wird und gemeinsam mit dem Wasser aus dem Heißwassertank zum Wasserauslass befördert wird. Die Membranhaut ist meist sehr elastisch und verfügt über wenig Eigenspannung, um Wasser aus dem Volumen zu pressen. Dies geschieht im Wesentlichen über den Venturi-Effekt.

Da sich das Ventil 14 und die Aufnahmevorrichtung 16 in der ersten Zuleitung 2 zwischen der Wassererhitzungsvorrichtung 8 und dem Wasserauslass, hier der Armatur, befinden, wird das Wasser aus der Förderleitung bei einem Stopp des Wassers nach Heißwasserförderung lediglich teilweise zurück in die erste Zuleitung 2 und in die Aufnahmevorrichtung 16 gezogen.

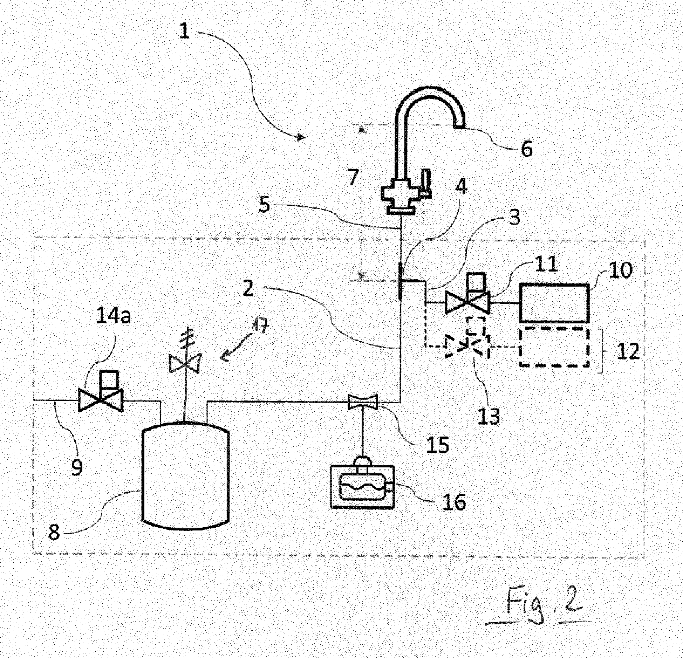

In Figur 2 ist eine Wasseraufbereitungsvorrichtung 1 als offenes System dargestellt, die wie die Wasseraufbereitungsvorrichtung 1 aus Figur 1 aufgebaut ist, wobei entsprechend in der ersten Zuleitung 2 kein Ventil 14 angeordnet ist. Eine Förderung von Heißwasser aus dem Wasserauslass 6 wird über ein Ventil 14a gesteuert, das in der Versorgungsleitung 9 angeordnet ist. Wie bei der Wasseraufbereitungsvorrichtung 1 aus Figur 1 wird das Wasser aus der Förderleitung bei einem Stopp des Wassers durch Schließen des Ventils 14a nach Heißwasserförderung lediglich teilweise in der ersten Zuleitung 2 und in die Aufnahmevorrichtung 16 aufgenommen.

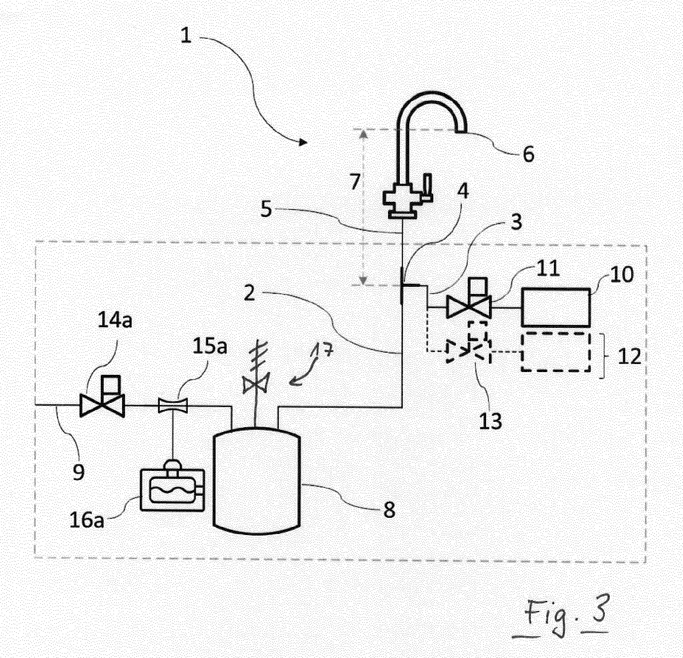

In Figur 3 ist eine Wasseraufbereitungsvorrichtung 1, ebenfalls als offenes Systemdargestellt, die wie die Wasseraufbereitungsvorrichtung 1 aus Figur 2 aufgebaut ist, wobei die Aufnahmevorrichtung 16a sowie die Rückführvorrichtung 15a statt in der ersten Zuleitung 2 ebenfalls wie das Ventil 14a in der Versorgungsleitung 9 angeordnet ist. Hier wird das Wasservolumen der Förderleitung 5 über die erste Zuleitung 2 und die Wassererhitzungsvorrichtung 8 in die Aufnahmevorrichtung 16a aufgenommen.

In allen Figuren 1-3 ist ein Sicherheitsventil an der Wasseraufbereitungsvorrichtung 1 angeordnet, falls beim Erhitzen des Wassers ein zu großer Überdruck in dem Gefäß herrscht. Eigentlich gibt es bei den meisten Ausführungen in der Regel beim Hochdrucktank eines geschlossenen Systems eine Drucksicherung in Form eines Überdruckventils, welches direkt an den Ablauf gekoppelt ist. Beim offenen System ist dies nicht nötig, da er ja offen ist, jedoch sind grundsätzlich auch Systeme bekannt, bei denen an der Wassererhitzungsvorrichtung ein Überdruckventil für den Fall installiert wird, dass der Auslauf zu (verstopft oder in sonstiger Weise blockiert) ist.

### Bezugszeichenliste:

- 1: Wasseraufbereitungsvorrichtung
- 2: erste Zuleitung
- 3: zweite Zuleitung
- 4: Verbindungsstelle
- 5: Förderleitung
- 6: Wasserauslass
- 7: vertikaler Höhenunterschied
- 8: Wassererhitzungsvorrichtung
- 9: Versorgungsleitung
- 10: Wasserkühlsystem
- 11: Ventil
- 12: Karbonisator
- 13: Ventil
- 14: Ventil
- 14a: Ventil
- 15: Rückführvorrichtung
- 15a: Rückführvorrichtung
- 16: Aufnahmevorrichtung
- 16a: Aufnahmevorrichtung
- 17: Überdruckventil

## Patentansprüche

1. Vorrichtung (1) zur Aufbereitung von Wasser, umfassend eine Wassererhitzungsvorrichtung (8) mit einer Versorgungsleitung (9) zur Versorgung der Wassererhitzungsvorrichtung (8) mit Wasser und einer an der Wassererhitzungsvorrichtung (8) angeschlossenen ersten Zuleitung (2) zur Leitung von heißem Wasser und einer zweiten Zuleitung (3) zur Leitung von kaltem und/oder karbonisiertem Wasser, wobei die erste und die zweite Zuleitung (2, 3) über eine Verbindungsstelle (4) in eine gemeinsame Förderleitung (5) münden, die in einem Wasserauslass (6) endet, **dadurch gekennzeichnet, dass** in der ersten Zuleitung (2) oder in der Versorgungsleitung (9) eine Aufnahmevorrichtung (16, 16a) zur Entwässerung der Förderleitung (5) bei einem gestoppten Fluss des Wassers der ersten Zuleitung (2) vorgesehen ist und die Aufnahmevorrichtung (16, 16a) mit dem Wasser aus der Förderleitung (5) befüllbar ist.

2. Vorrichtung (1) nach Anspruch 1, **dadurch gekennzeichnet, dass** eine weitere Aufnahmevorrichtung (16) in der zweiten Zuleitung (3) angeordnet ist.

3. Vorrichtung (1) nach einem der vorgenannten Ansprüche, **dadurch gekennzeichnet, dass** die Aufnahmevorrichtung (16, 16a) so ausgebildet ist, dass darin wenigstens das Wasservolumen der Förderleitung (5) aufnehmbar ist.

4. Vorrichtung (1) nach einem der vorgenannten Ansprüche, **dadurch gekennzeichnet, dass** die Aufnahmevorrichtung (16, 16a) eine Rückführvorrichtung (15, 15a) aufweist, mit der das Wasser in das Leitungssystem, insbesondere in die Versorgungsleitung (9) und/oder in die erste Zuleitung (2) und/oder die zweite Zuleitung (3), rückleitbar ist.

5. Vorrichtung (1) nach einem der vorgenannten Ansprüche, **dadurch gekennzeichnet, dass** die Aufnahmevorrichtung (16, 16a) ein Membranausgleichsgefäß umfasst, welches eine Membran umfasst, die infolge des Drucks im Leitungssystem ausdehnbar ist, um das Aufnahmevolumen zu vergrößern.

6. Vorrichtung (1) nach einem der vorgenannten Ansprüche, **dadurch gekennzeichnet, dass** die Aufnahmevorrichtung (16, 16a) und/oder die Rückführvorrichtung (15, 15a) eine Venturi-Düse aufweist,
• die in der ersten Zuleitung (2) angeordnet ist und/oder mit der ersten Zuleitung (2) verbunden ist und/oder
• die in der zweiten Zuleitung (3) angeordnet ist und/oder mit der zweiten Zuleitung (3) verbunden ist und/oder
• die in der Versorgungsleitung (9) angeordnet ist und/oder mit der Versorgungsleitung (9) verbunden ist.

7. Vorrichtung (1) nach einem der vorgenannten Ansprüche, **dadurch gekennzeichnet, dass** die Aufnahmevorrichtung (16, 16a) in vertikaler Richtung, insbesondere in Schwerkraftrichtung, unterhalb oder in gleicher Ebene zur Verbindungstelle (4) angeordnet ist, wobei die Förderleitung (5) und der Wasserauslass (6) in vertikaler Richtung, insbesondere in Schwerkraftrichtung, oberhalb der Verbindungsstelle (4) liegt und zwischen dem Wasserauslass (6) und der Verbindungsstelle (4) ein vertikaler Höhenunterschied (7) ausgebildet ist, sodass eine Rückströmung des Wassers aus der Förderleitung (5) durch die Schwerkraft ausbildbar ist.

8. Vorrichtung (1) nach einem der vorgenannten Ansprüche, **dadurch gekennzeichnet, dass** die zweite Zuleitung (3) an ein Wasserkühlsystem (10) und/oder einen Karbonisator zur Einspeisung von karbonisiertem Wasser angeschlossen ist.

9. Vorrichtung nach einem der vorgenannten Ansprüche, **dadurch gekennzeichnet, dass** die Versorgungsleitung und/oder die erste Zuleitung und/oder die zweite Zuleitung ein Ventil, insbesondere Magnetventil, aufweist.

10. Vorrichtung nach einem der vorgenannten Ansprüche, **dadurch gekennzeichnet, dass**:
• das Ventil (14, 14a) gegenüber der Aufnahmevorrichtung (16, 16a) und/oder der Rückführvorrichtung (15, 15a) in Fließrichtung vorgeschaltet angeordnet ist und/oder
• das Ventil (14) zwischen die Wassererhitzungsvorrichtung (8) einerseits und die Aufnahmevorrichtung (16) und/oder die Rückführvorrichtung (15) andererseits angeschlossen ist, wobei insbesondere das Ventil (14) und die Aufnahmevorrichtung (16) und/oder die Rückführvorrichtung (15) an der ersten Zuleitung (2) angeschlossen sind, und/oder
• das Ventil (14a) einerseits und die Aufnahmevorrichtung (16) und/oder die Rückführvorrichtung (15) andererseits in jeweils unterschiedlichen Leitungen angeschlossen sind, insbesondere das Ventil (14a) in der Versorgungsleitung (9) einerseits und die Aufnahmevorrichtung (16) und/oder die Rückführvorrichtung (15) in der ersten Zuleitung (2) andererseits und/oder
• die Aufnahmevorrichtung (16a) und/oder die Rückführvorrichtung (15a) zwischen das Ventil (14a) und die Wassererhitzungsvorrichtung (8) angeschlossen ist, wobei insbesondere das Ventil (14a) und die Aufnahmevorrichtung (16a) und/oder die Rückführvorrichtung (15a) an der Versorgungsleitung (9) angeschlossen sind.

11. Vorrichtung nach einem der vorgenannten Ansprüche, **dadurch gekennzeichnet, dass** die Vorrichtung (1) zur Aufbereitung von Wasser und/oder die Wassererhitzungsvorrichtung als offenes oder geschlossenes System ausgebildet ist.

12. Vorrichtung nach einem der vorgenannten Ansprüche, **dadurch gekennzeichnet, dass** die Verbindungsstelle als T-Stück (4) ausgebildet ist.

## Geänderte Patentansprüche

### Geänderte Patentansprüche gemäss Regel 137(2) EPÜ.

1. Vorrichtung (1) zur Aufbereitung von Wasser, umfassend eine Wassererhitzungsvorrichtung (8) mit einer Versorgungsleitung (9) zur Versorgung der Wassererhitzungsvorrichtung (8) mit Wasser und einer an der Wassererhitzungsvorrichtung (8) angeschlossenen ersten Zuleitung (2) zur Leitung von heißem Wasser und einer zweiten Zuleitung (3) zur Leitung von kaltem und/oder karbonisiertem Wasser, wobei die erste und die zweite Zuleitung (2, 3) über eine Verbindungsstelle (4) in eine gemeinsame Förderleitung (5) münden, die in einem Wasserauslass (6) endet, wobei in der ersten Zuleitung (2) oder in der Versorgungsleitung (9) eine Aufnahmevorrichtung (16, 16a) zur Entwässerung der Förderleitung (5) bei einem gestoppten Fluss des Wassers der ersten Zuleitung (2) vorgesehen ist und die Aufnahmevorrichtung (16, 16a) mit dem Wasser aus der Förderleitung (5) befüllbar ist, **dadurch gekennzeichnet, dass** die Aufnahmevorrichtung (16, 16a) eine Rückführvorrichtung (15, 15a) aufweist, mit der das Wasser in das Leitungssystem, insbesondere in die Versorgungsleitung (9) und/oder in die erste Zuleitung (2) und/oder die zweite Zuleitung (3), rückleitbar ist.

2. Vorrichtung (1) nach Anspruch 1, **dadurch gekennzeichnet, dass** eine weitere Aufnahmevorrichtung (16) in der zweiten Zuleitung (3) angeordnet ist.

3. Vorrichtung (1) nach einem der vorgenannten Ansprüche,
**dadurch gekennzeichnet, dass** die Aufnahmevorrichtung (16, 16a) so ausgebildet ist, dass darin wenigstens das Wasservolumen der Förderleitung (5) aufnehmbar ist.

4. Vorrichtung (1) nach einem der vorgenannten Ansprüche,
**dadurch gekennzeichnet, dass** die Aufnahmevorrichtung (16, 16a) ein Membranausgleichsgefäß umfasst, welches eine Membran umfasst, die infolge des Drucks im Leitungssystem ausdehnbar ist, um das Aufnahmevolumen zu vergrößern.

5. Vorrichtung (1) nach einem der vorgenannten Ansprüche, **dadurch gekennzeichnet, dass** die Aufnahmevorrichtung (16, 16a) und/oder die Rückführvorrichtung (15, 15a) eine Venturi-Düse aufweist,
• die in der ersten Zuleitung (2) angeordnet ist und/oder mit der ersten Zuleitung (2) verbunden ist und/oder
• die in der zweiten Zuleitung (3) angeordnet ist und/oder mit der zweiten Zuleitung (3) verbunden ist und/oder
• die in der Versorgungsleitung (9) angeordnet ist und/oder mit der Versorgungsleitung (9) verbunden ist.

6. Vorrichtung (1) nach einem der vorgenannten Ansprüche, **dadurch gekennzeichnet, dass** die Aufnahmevorrichtung (16, 16a) in vertikaler Richtung, insbesondere in Schwerkraftrichtung, unterhalb oder in gleicher Ebene zur Verbindungstelle (4) angeordnet ist, wobei die Förderleitung (5) und der Wasserauslass (6) in vertikaler Richtung, insbesondere in Schwerkraftrichtung, oberhalb der Verbindungsstelle (4) liegt und zwischen dem Wasserauslass (6) und der Verbindungsstelle (4) ein vertikaler Höhenunterschied (7) ausgebildet ist, sodass eine Rückströmung des Wassers aus der Förderleitung (5) durch die Schwerkraft ausbildbar ist.

7. Vorrichtung (1) nach einem der vorgenannten Ansprüche, **dadurch gekennzeichnet, dass** die zweite Zuleitung (3) an ein Wasserkühlsystem (10) und/oder einen Karbonisator zur Einspeisung von karbonisiertem Wasser angeschlossen ist.

8. Vorrichtung nach einem der vorgenannten Ansprüche, **dadurch gekennzeichnet, dass** die Versorgungsleitung und/oder die erste Zuleitung und/oder die zweite Zuleitung ein Ventil, insbesondere Magnetventil, aufweist.

9. Vorrichtung nach einem der vorgenannten Ansprüche, **dadurch gekennzeichnet, dass**:
• das Ventil (14, 14a) gegenüber der Aufnahmevorrichtung (16, 16a) und/oder der Rückführvorrichtung (15, 15a) in Fließrichtung vorgeschaltet angeordnet ist und/oder
• das Ventil (14) zwischen die Wassererhitzungsvorrichtung (8) einerseits und die Aufnahmevorrichtung (16) und/oder die Rückführvorrichtung (15) andererseits angeschlossen ist, wobei insbesondere das Ventil (14) und die Aufnahmevorrichtung (16) und/oder die Rückführvorrichtung (15) an der ersten Zuleitung (2) angeschlossen sind, und/oder
• das Ventil (14a) einerseits und die Aufnahmevorrichtung (16) und/oder die Rückführvorrichtung (15) andererseits in jeweils unterschiedlichen Leitungen angeschlossen sind, insbesondere das Ventil (14a) in der Versorgungsleitung (9) einerseits und die Aufnahmevorrichtung (16) und/oder die Rückführvorrichtung (15) in der ersten Zuleitung (2) andererseits und/oder
• die Aufnahmevorrichtung (16a) und/oder die Rückführvorrichtung (15a) zwischen das Ventil (14a) und die Wassererhitzungsvorrichtung (8) angeschlossen ist, wobei insbesondere das Ventil (14a) und die Aufnahmevorrichtung (16a) und/oder die Rückführvorrichtung (15a) an der Versorgungsleitung (9) angeschlossen sind.

10. Vorrichtung nach einem der vorgenannten Ansprüche, **dadurch gekennzeichnet, dass** die Vorrichtung (1) zur Aufbereitung von Wasser und/oder die Wassererhitzungsvorrichtung als offenes oder geschlossenes System ausgebildet ist.

11. Vorrichtung nach einem der vorgenannten Ansprüche, **dadurch gekennzeichnet, dass** die Verbindungsstelle als T-Stück (4) ausgebildet ist.
